# EUROPEAN PATENT SPECIFICATION

(11) **EP 3 778 199 B1**
(45) Date of publication and mention of the grant of the patent: **25.06.2025**
(21) Application number: 20190747.4
(22) Date of filing: 12.08.2020
(51) Int. Cl.: B31B 70/81

(54) **METHODS AND APPARATUS FOR CUTTING AND PLACING FILM ONTO PACKAGING SUBSTRATES**
VERFAHREN UND VORRICHTUNG ZUM SCHNEIDEN UND PLATZIEREN VON FOLIE AUF VERPACKUNGSSUBSTRATE
PROCÉDÉS ET APPAREIL DE DÉCOUPE ET DE PLACEMENT DE FILM SUR DES SUBSTRATS D'EMBALLAGE

(30) Priority: 14.08.2019 US 201962886755 P; 10.08.2020 WO PCT/US2020/045615
(43) Date of publication of application: 17.02.2021
(73) Proprietor: CSP Technologies, Inc., Auburn AL 36832 (US)
(72) Inventor: MAURER, Franz, 1140 Wien (AT)
(74) Representative: Maiwald GmbH

(56) References cited:
- EP-A1- 1 732 812
- EP-B1- 1 732 812
- DE-A1- 102004 013 664
- DE-B- 1 167 731
- US-A- 3 146 152
- US-A- 6 098 369
- US-A1- 2015 328 584
- US-A1- 2016 039 955
- US-A1- 2016 279 847
- US-A1- 2018 099 804
- US-A1- 2020 207 534

## Description

### FIELD

The disclosed concept relates to methods and apparatus for making packaging films having a polymer film layer that includes an active agent, e.g., desiccant. More particularly, the disclosed methods and apparatus are configured to cut a piece of polymer film with active agent at a cutting station, transfer the piece of film to a sealing station and then seal the piece of film to a base film that preferably comprises a foil, thereby forming the packaging film.

### BACKGROUND

Moisture sensitive and/or oxygen sensitive products such as, for example, diagnostic test strips, inhalers and pharmaceutical tablets, are commonly contained in packaging assemblies. The packaging assemblies typically include a product space which houses the product, and an active agent, such as a desiccant entrained polymer, desiccant sachet or desiccant canister, e.g. as shown in US 3 146 152 A, US 2018/099804 A1, US 2015/328584 A1 and US 2016/039955 A1. The active agent can function to, e.g., absorb moisture or scavenge oxygen that would otherwise compromise and reduce the efficacy or shelf life of the product.

In some packaging assemblies, it is desirable to include the active agent in the form of an entrained polymer film. Such films are typically very thin and are advantageously included in blister packs, pouches and other such flexible or semi-flexible packaging. It is preferred that entrained polymer film, e.g., desiccant film, be integral with the packaging rather than provided in a loose, movable manner. One approach would be to provide an adhesive between the film and the substrate or provide the film with an adhesive backing. However, such a configuration is very difficult to effectuate in automated manufacturing and the adhesives can emit undesirable volatiles that may adversely affect the very product the entrained film is intended to protect.

Applicant therefore prefers utilizing heat staking via pressure and heat, to adhere the entrained polymer film to a substrate, without using a separate adhesive. Heat staking is described in U.S. Pat. No. 8,142,603, to applicant CSP Technologies, Inc. That patent and the heat staking process generally are described in greater detail below. While heat staking is preferred, automating a method for applying heat staking at high volume can be challenging. There is thus a need for improved methods and automated equipment for producing packaging film comprising an entrained polymer film with active agent and a foil substrate.

### BRIEF SUMMARY OF THE DISCLOSED CONCEPT

Accordingly, in the disclosed concept, a method and apparatus of manufacturing a packaging film is provided. The method includes providing the apparatus configured to produce a packaging film for products that are sensitive to at least one component in the ambient environment, e.g., moisture or oxygen. The apparatus includes a cutting station and a sealing station that is positioned at a separate location from the cutting station. The method includes conveying a strip of a heat sealable base film on the apparatus. A ribbon of entrained polymer film comprising an active agent (e.g., desiccant or oxygen scavenger) is conveyed on the apparatus and is passed through the cutting station. A piece of the entrained polymer film is cut. The piece of entrained polymer film is transferred from the cutting station to the sealing station, whereupon the piece of entrained polymer film is sealed to a portion of the heat sealable base film, thereby forming the packaging film.

### BRIEF DESCRIPTION OF THE DRAWINGS

The disclosed concept will be described in conjunction with the following drawings in which like reference numerals designate like elements and wherein:
Fig. 1 is an isometric view of a first embodiment of an apparatus for producing a packaging film, wherein the packaging film includes a heat sealable base film and a film comprising an active agent that is configured to absorb, adsorb or release a selected material(s).
Fig. 1A is an enlarged view of a portion of the apparatus of Fig. 1
Fig. 2 is an alternative isometric view of the apparatus of Fig. 1.
Fig. 2A is a side isometric view of a portion of the apparatus of Fig. 1 illustrating sealing stations.
Fig. 3 is a side isometric view of a portion of the apparatus of Fig. 1 illustrating cutting stations and film transfer device.
Fig. 4 is a front isometric view of one cutting station and film transfer device, with a piece of film comprising active agent being cut in the cutting station;
Fig. 5 is a side isometric view similar to that of Fig. 3, after respective pieces of film comprising active agent have been cut in the cutting stations and are being placed onto respective film transfer devices.
Fig. 6 is a side isometric view similar to that of Figs. 3 and 5, as each respective transfer device transfers each piece of film comprising active agent to a respective sealing station for sealing onto a base film.
Fig. 7 is a front isometric view of one cutting station and film transfer device, showing a piece of film comprising active agent being transported on a transfer device from the cutting station to a sealing station.
Fig. 8 is a rear isometric view of a portion of the apparatus of Fig. 1 illustrating a portion of strip of film comprising active agent as it is fed onto the cutting station.
Fig. 9 is an isometric view of a second embodiment of an apparatus for producing a packaging film, wherein the packaging film includes a heat sealable base film and a film comprising an active agent that is configured to absorb, adsorb or release a selected material(s).
Fig. 9A is a side isometric view of a portion of the apparatus of Fig. 9 illustrating sealing stations.
Fig. 10 is a side isometric view of a portion of the apparatus of Fig. 9 showing parallel strips of film comprising active agent fed through the apparatus.
Fig. 11 is a rear isometric view of a portion of the apparatus of Fig. 9 showing cut pieces of film comprising active agent being transferred and sealed onto a base film that is being dispensed from the apparatus.
Fig. 12 is a top isometric view of the apparatus of Fig. 9 showing parallel strips of film comprising active agent being fed through the apparatus.
Fig. 13 is a rear isometric view of a portion of the apparatus of Fig. 9 showing parallel strips of film comprising active agent being fed to respective cutting stations and film transfer device to be primed for cutting and transfer.
Fig. 14 is a rear isometric view of a portion of the apparatus of Fig. 9 similar to the view in Fig. 13, showing film pieces being cut from the strips of film comprising active agent at respective cutting stations.
Fig. 15 is a rear isometric view of a portion of the apparatus of Fig. 9 similar to the view in Fig. 13, showing film pieces after they have been cut from the strips of film comprising active agent at respective cuttings stations, wherein the respective film pieces are disposed on the film transfer device and about to be transferred to respective sealing stations for sealing onto a base film.

### DETAILED DESCRIPTION OF THE PREFERRED EMBODIMENTS

While systems, devices and methods are described herein by way of examples and embodiments, those skilled in the art recognize that the presently disclosed technology is not limited to the embodiments or drawings described. Rather, the presently disclosed technology covers all modifications, equivalents and alternatives falling within the scope of the appended claims.

Any headings used herein are for organizational purposes only and are not meant to limit the scope of the description or the claims. As used herein, the word "may" is used in a permissive sense (i.e., meaning having the potential to) rather than the mandatory sense (i.e., meaning must). Unless specifically set forth herein, the terms "a," "an" and "the" are not limited to one element but instead should be read as meaning "at least one."

This specification discloses methods for forming packaging films using polymer films entrained with an active agent, i.e., an agent that absorbs, adsorbs or releases a selected material. For example, an active agent may absorb moisture, adsorb volatile organic compounds or release antimicrobial gas. Polymer films entrained with an active agent, as disclosed herein, may alternatively be referred to as entrained polymer films. As used herein, the term "entrained polymer" is defined as a monolithic material formed of at least a base polymer with an active agent and optionally also a channeling agent entrained or distributed throughout. These types of entrained polymers and methods of making and using the same are disclosed, e.g., in Applicant's U.S. Pat. Nos. 5,911,937, 6,214,255, 6,130,263, 6,080,350, 6,174,952, 6,124,006 and 6,221,446, and U.S. Pat. Pub. No. 2016/0039955. Optionally, entrained polymer films may have a thickness of about 0.05 mm to about 2.5 mm, optionally about 0.2 to about 1.8 mm, optionally 0.2 to 1.3 mm.

The active agent (whether desiccant, oxygen scavenger, a releasing material or ingredient, etc., or combination thereof) is capable of acting on, interacting or reacting with a selected material (e.g., moisture or oxygen). Examples of such actions or interactions may include absorption, adsorption (sorption, generally) or release of the selected material. Entrained polymer films are typically made by extrusion.

The active agents (i) can be immiscible with the base polymer and when mixed and heated with the base polymer and a channeling agent, will not melt, i.e., has a melting point that is higher than the melting point for either the base polymer or the channeling agent, and/or (ii) acts on, interacts or reacts with a selected material. Active agents according to the presently disclosed technology may be in the form of particles such as minerals (e.g., molecular sieve or silica gel, in the case of desiccants), but the presently disclosed technology should not be viewed as limited only to particulate active agents. For example, in some embodiments, an oxygen scavenging formulation may be made from a resin which serves as, or as a component of, the active agent. Such resin may include, for example, one as described in U.S. Pat. No. 7,893,145.

As used herein, the term "base polymer" is a polymer optionally having a gas transmission rate of a selected material that is substantially lower than or lower than, that of the channeling agent (where a channeling agent is used in the entrained polymer). By way of example, such a transmission rate would be a water vapor transmission rate in embodiments where the selected material is moisture and the active ingredient is a water absorbing desiccant. In any embodiment (whether or not a channeling agent is included), the primary functions of the base polymer are to provide moldability and structure for the entrained polymer. Suitable base polymers may include thermoplastic polymers, e.g., polyolefins such as polypropylene and polyethylene, polyisoprene, polybutadiene, polybutene, polysiloxane, polycarbonates, polyamides, ethylene-vinyl acetate copolymers, ethylene-methacrylate copolymer, poly(vinyl chloride), polystyrene, polyesters, polyanhydrides, polyacrylianitrile, polysulfones, polyacrylic ester, acrylic, polyurethane and polyacetal, or copolymers or mixtures thereof.

Referring to such a comparison of the base polymer and channeling agent water vapor transmission rate, in any embodiment, the channeling agent has a water vapor transmission rate of at least two times that of the base polymer, optionally at least five times that of the base polymer, optionally at least ten times that of the base polymer, optionally at least twenty times that of the base polymer, optionally at least fifty times that of the base polymer, optionally at least one hundred times that of the base polymer.

As used herein, the term "channeling agent" or "channeling agents" is defined as a material that is immiscible with the base polymer and has an affinity to transport a gas phase substance at a faster rate than the base polymer. Optionally, a channeling agent is capable of forming channels through the entrained polymer when formed by mixing the channeling agent with the base polymer. Optionally, such channels are capable of transmitting a selected material through the entrained polymer at a faster rate than in solely the base polymer. As used herein, the term "channels" or "interconnecting channels" is defined as passages formed of the channeling agent that penetrate through the base polymer and may be interconnected with each other.

As used herein, the term "monolithic," "monolithic structure" or "monolithic composition" is defined as a composition or material that does not consist of two or more discrete macroscopic layers or portions. Accordingly, a "monolithic composition" does not include a multi-layer composite, although it could serve as a layer of such a composite.

As used herein, the term "phase" is defined as a portion or component of a monolithic structure or composition that is uniformly distributed throughout, to give the structure or composition it's monolithic characteristics.

As used herein, the term "selected material" is defined as a material that is acted upon, by, or interacts or reacts with an active agent and is capable of being transmitted through the channels of an entrained polymer. For example, in embodiments in which a desiccant is used as an active agent, the selected material may be moisture or a gas that can be absorbed by the desiccant. In embodiments in which a releasing material is used as an active agent, the selected material may be an agent released by the releasing material, such as moisture, fragrance, or an antimicrobial agent (e.g., chlorine dioxide). In embodiments in which an adsorbing material is used as an active ingredient, the selected material may be certain volatile organic compounds and the adsorbing material may be activated carbon.

In any embodiment, suitable channeling agents may include a polyglycol such as polyethylene glycol (PEG), ethylene-vinyl alcohol (EVOH), polyvinyl alcohol (PVOH), glycerin polyamine, polyurethane and polycarboxylic acid including polyacrylic acid or polymethacrylic acid. Alternatively, the channeling agent can be, for example, a water insoluble polymer, such as a propylene oxide polymerisate-monobutyl ether, such as Polyglykol B01/240, produced by CLARIANT. In other embodiments, the channeling agent could be a propylene oxide polymerisate monobutyl ether, such as Polyglykol B01/20, produced by CLARIANT, propylene oxide polymerisate, such as Polyglykol D01/240, produced by CLARIANT, ethylene vinyl acetate, nylon 6, nylon 66, or any combination of the foregoing.

Suitable active ingredients according to the presently disclosed technology include absorbing materials, such as desiccating compounds. If the active agent is a desiccant, any suitable desiccant for a given application may be used. Typically, physical absorption desiccants are preferred for many applications. These may include molecular sieves, silica gels, clays and starches. Alternatively, the desiccant may be a chemical compound that forms crystals containing water or compounds which react with water to form new compounds.

Optionally, in any embodiment, the active agent may be an oxygen scavenger, e.g., an oxygen scavenging resin formulation.

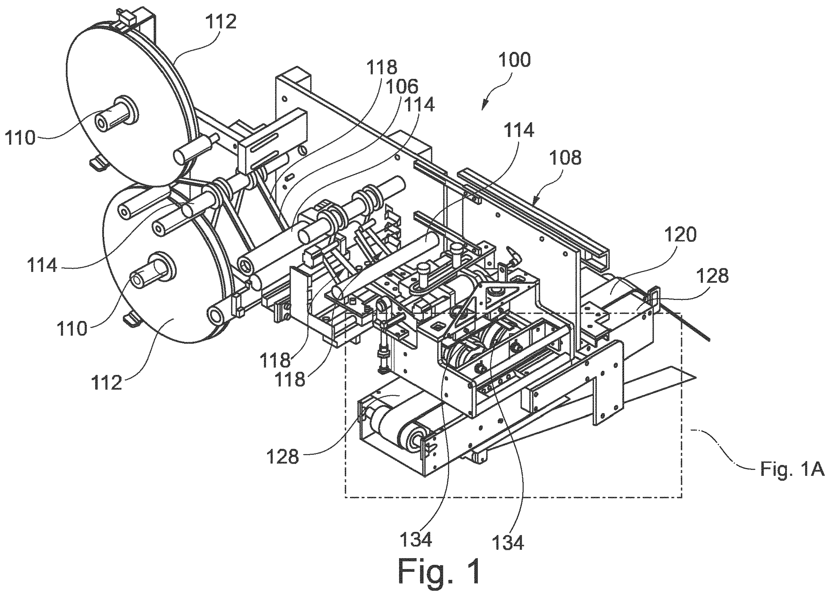

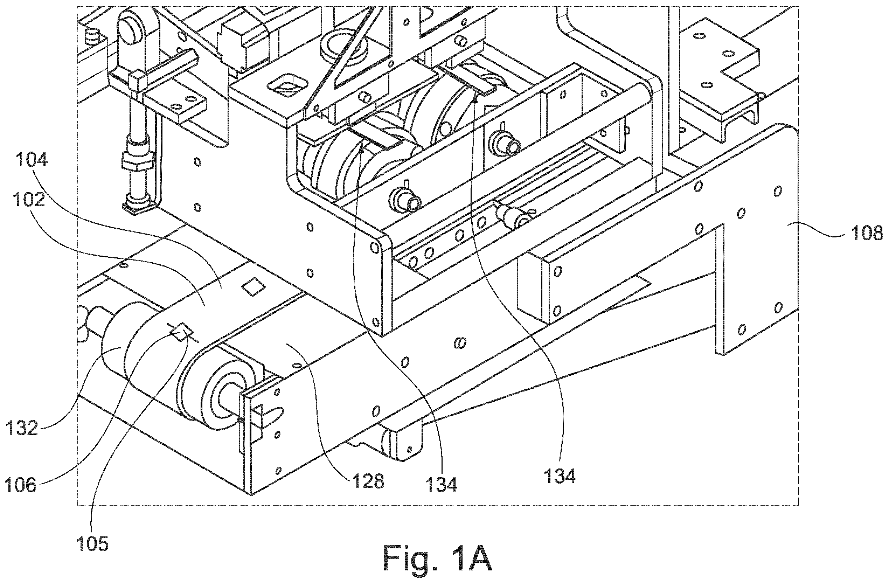

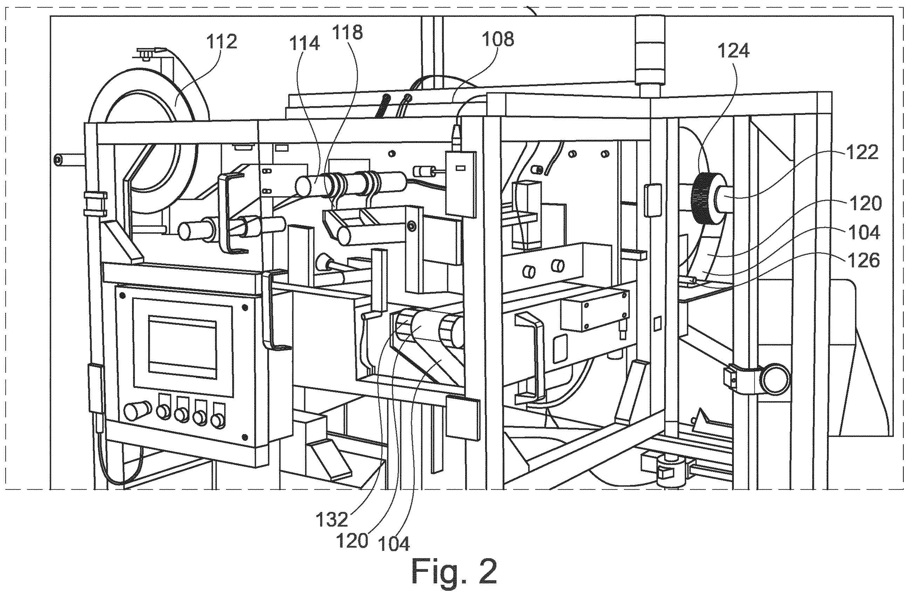

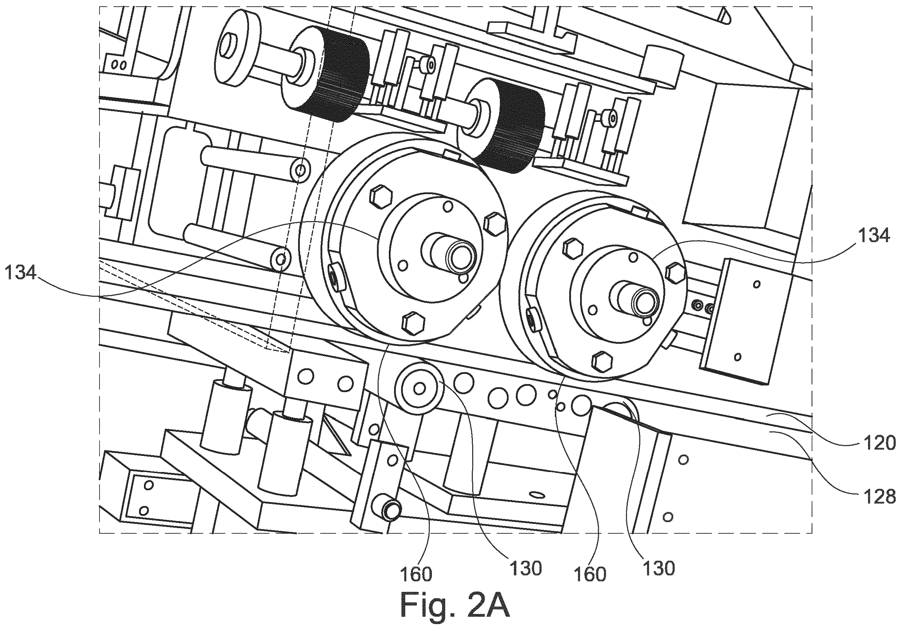

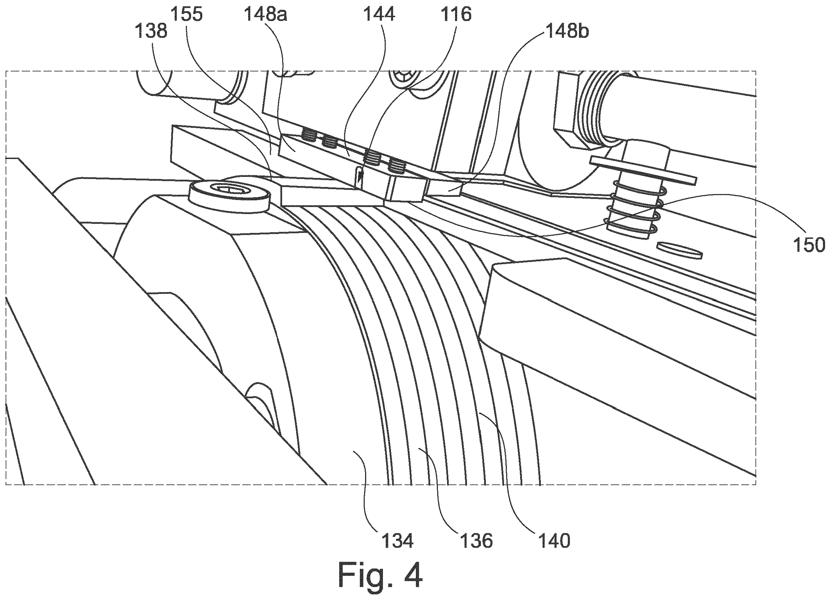

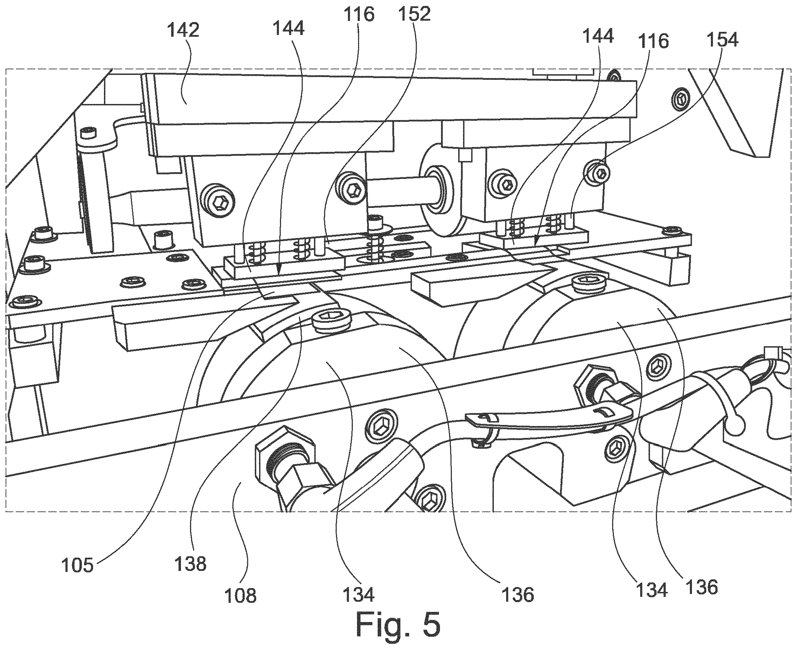

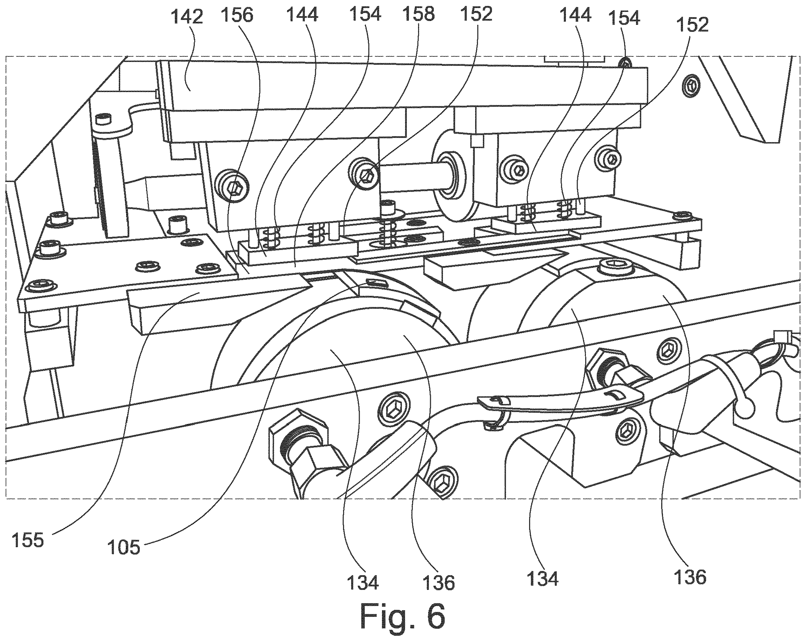

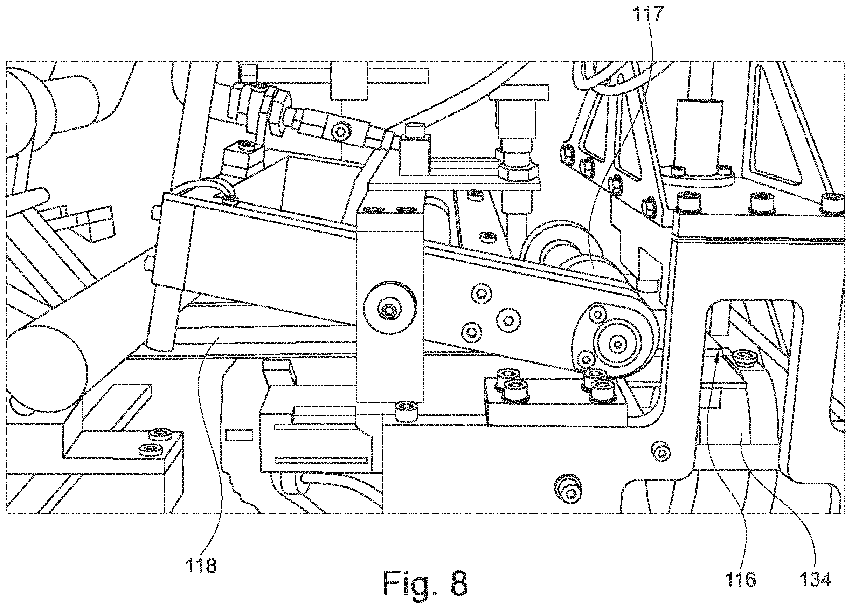

Referring now in detail to the various figures of the drawings wherein like reference numerals refer to like parts throughout, there is shown in Figs. 1 to 8 various views of an apparatus 100 for producing a packaging film 102, wherein the packaging film 102 includes a heat sealable base film 104 and a film 106 comprising an active agent that is configured to absorb, adsorb or release a selected material(s), secured (e.g., heat sealed) to the base film 104. For simplicity, the film 106 comprising an active agent is predominantly referred to herein as a desiccant film 106, however, it should be understood that the desiccant film 106 could alternatively be an oxygen scavenging film or any other entrained polymer film. Optional compositions of the desiccant film 106 include entrained polymers discussed above. The base film 104 optionally comprises a foil and a seal layer atop the foil. Optionally, the seal layer is composed of polyethylene (LLDPE), polypropylene or SURYLN ionomer resin from Dow, for example. The base film chosen should have a seal layer comprising a polymer material that is compatible with the base polymer of the desiccant film. In other words, like polymers should be matched. For example, if the base polymer of the desiccant film 106 includes polyethylene, then the seal layer of the base film 104 should preferably also include polyethylene. Choosing a foil with a sealing layer that is compatible with the base polymer of the desiccant film 106 facilitates creation of a successful bond between the desiccant film 106 and the foil. The seal layer has a melting point that will vary by manufacturer and is configured to become pliable when sufficient heat is supplied to the foil.

Optionally, the desiccant film 106 is heat staked to the base film 104 to form the packaging film 102. "Heat staking" means disposing the desiccant film onto foil, applying sufficient heat to the foil so as to activate (e.g., soften or otherwise make pliable) a heat seal layer of the foil and applying sufficient pressure to the desiccant film and foil combination so as to secure the desiccant film to the foil. Preferably, when heat staked, the desiccant film adheres to the foil solely by the heat and pressure applied to the combination and without any additional adhesive materials. In an optional heat staking method that may be performed using apparatus described herein, a foil is provided having a polymer sealing layer. Additionally, a desiccant film is provided as well as a flexible package. The foil is heated such that the polymer sealing layer becomes pliable. A sealing area of the foil is selected for forming a seal between the foil and the flexible package. A non-sealing area of the foil not to be sealed to the flexible package is also selected. The active film is applied to the polymer sealing layer of the heated foil in the non-sealing area of the heated foil to produce an active film and foil combination. Sufficient pressure is applied to the active film and foil combination and sufficient heat is applied to the foil so that the desiccant film adheres to the polymer sealing layer of the foil. The active film and foil combination is adhered to the flexible package by forming a seal between the sealing area of the foil and the flexible package. The process of heat staking in this context is discussed more fully in U.S. Pat. No. 8,142,603.

The apparatus 100 comprises a frame 108 that supports components of the apparatus 100. The apparatus 100 comprises at least one desiccant film reel spindle 110. As shown, two desiccant film reel spindles 110 are provided, however it is contemplated that a single such spindle or optionally three or more may alternatively be provided. A reel 112 of desiccant film 106 is rotatably mounted to each desiccant film reel spindle 110. From each respective reel 112, a ribbon 118 of desiccant film 106 is fed along a series of guideposts or rollers 114 towards a corresponding cutting station 116 located downstream from the reel 112. The guideposts or rollers 114 help to keep the ribbon 118 of desiccant film 106 stable as it is fed from the reel 112 to the cutting station 116. Optionally, a servo motor moves the ribbon 118 of desiccant film 106 towards the cutting station 116, optionally in a pulsing motion (i.e., start-stop). The servo motor may drive feeder rollers 117, which pull the ribbon 118 towards a respective cutting station 116, as discussed below.

The apparatus 100 comprises at least one base film reel spindle 122. As shown, a single base film reel spindle 122 is provided, but it is contemplated that additional such spindles may be included. A reel 124 of base film 104 is rotatably mounted to the base film reel spindle 122. From the reel 124, the strip 120 of base film 104 is fed optionally beneath a roller 126 and guided to a platform 128. Optionally, the base film 104 is conveyed on the apparatus 100 as a lengthy strip 120, optionally in a direction that is transverse or perpendicular to the direction in which the ribbon 118 of desiccant film 106 is fed. In other words, theoretical vertical planes formed by respective axes of rotation of the spindles, would intersect each other perpendicularly or transversely.

The platform 128 includes at least one sealing station 130 (in the illustrated embodiment, there are two such sealing stations 130). The strip 120 of base film 104 is then fed to another roller 132 at the end of the platform 128, which optionally guides the base film 104 underneath and away from the platform 128. Optionally, the strip 120 of base film 104 is advanced with continuous motion and substantially constant speed.

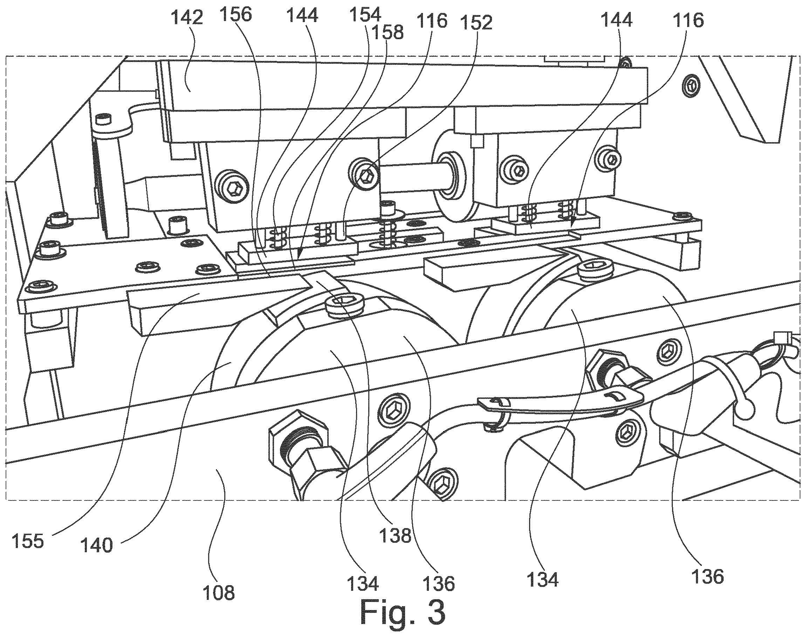

The apparatus 100 further comprises at least one transfer device 134, which is configured to transfer a cut desiccant film piece 105 from a cutting station 116 to a corresponding sealing station 130. The transfer device 134 comprises a rotatably mounted disk 136, which is optionally substantially cylindrical, although non-round shapes are also contemplated. For example, instead of a round shape, the disk may optionally have a central hub with legs radially projecting outward from the hub, for example. The disk 136 optionally comprises a plurality of film supports 138 extending from a radial surface 140 of the disk 136. Optionally, the disk 136 is configured to rotate in the same direction as the movement of the strip 120 of base film 104, as the strip 120 is advanced along the platform 128. In other words, the disk 136 rotates clockwise from the vantage of the view in Fig. 3.

The film supports 138 optionally comprise rubber, at least on their outer surfaces. Each film support 138 optionally includes small holes connected to a vacuum source, which help retain the cut desiccant film piece 105 to the film support 138 via suction from the vacuum source, when the cut desiccant film piece 105 is disposed thereon. Alternatively, an electrostatic charge or other means (e.g., grippers or knurls) may be employed to retain a cut desiccant film piece 105 to the film support 138.

As best seen in Figs. 3 to 6, a vertically displaceable mount 142 is provided. The mount 142 is vertically displaceable from a first (up) position to a second (down) position. The mount 142 is optionally driven pneumatically or is servo-driven. The mount 142 comprises extensions 144 corresponding to respective transfer devices 134. The extensions 144 each optionally include first and second platens 148a,b and a blade 150 therebetween. The platens 148a,b may be retained to the extensions 144 with posts 152, one or more of which optionally includes a compression spring member 154 disposed about it. The cutting station 116 further includes a cutting surface 155 and cutting surface edge 156. The cutting surface edge 156 may include both an edge of the cutting surface 155 and an edge of the film support 138, which are both generally collinear for a brief moment (at the time of cutting). A corresponding opposing edge 158 is nearly adjacent the cutting surface edge 156 at the time a desiccant film piece 105 is cut from the ribbon 118 of desiccant film 106. As used in this specification, "nearly adj acent" means the components are next to each other with only a narrow space in between, e.g., a space large enough for a blade to fit with clearance.

The cutting station 116 optionally operates as follows. Slightly upstream of the cutting station 116 is a feeder roller 117, which optionally has ridges or a knurled surface pattern to help maintain control and placement of the ribbon 118, as the feeder roller 117 advances the ribbon 118 towards the cutting station 116. The feeder roller 117 is servo-driven and is what optionally functions to pull the ribbon 118 from the reel 112 towards the cutting station 116. Having the feeder roller 117 driven by a servo motor allows for precision in the desired length of each film piece 105.

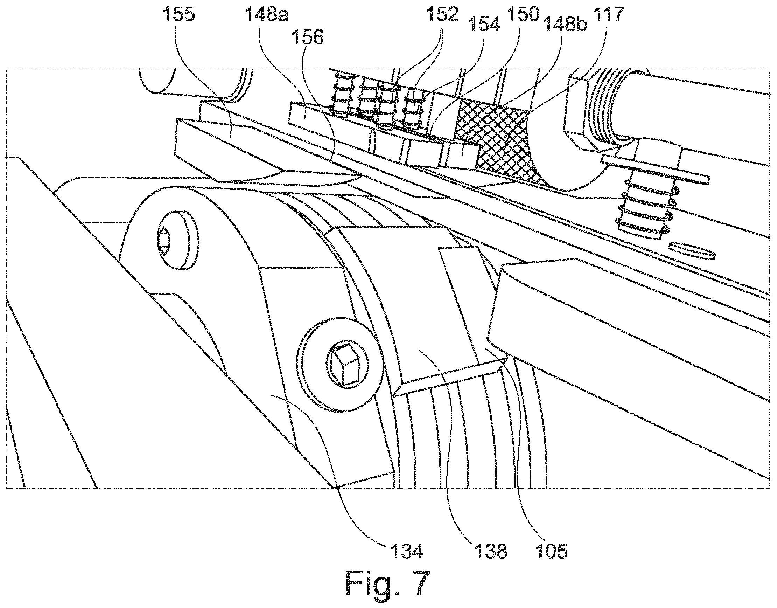

As the end of the ribbon 118 of desiccant film 106 is advanced to the cutting station 116, the mount 142 is in the first position (e.g., as shown in Fig. 7). At this point, a portion of the end of the ribbon 118 is disposed upon the film support 138 and another portion is disposed upon the cutting surface 155, nearly adjacent the cutting surface edge 156. The mount 142 is then displaced downwardly to the second position, thus driving the extension(s) 144 in a vertically downward direction. The platens 148a,b press down upon the portions of desiccant film 106 beneath them so as to retain the portions of desiccant film 106 in place. Nearly immediately thereafter or simultaneously, the blade 150 descends to cut the desiccant film 106 at the narrow gap between the cutting surface edge 156 and the corresponding opposing edge 158. In this way, the cut desiccant film piece 105 is created and disposed upon the film support 138.

The cut desiccant film piece 105 is retained to the film support 138, as discussed above. The disk 136 then rotates, e.g., clockwise from the vantage of the view shown in Figs. 3 to 7, to transport the cut desiccant film piece 105 from the cutting station 116 to the sealing station 130. At the same time, another film support 138 is positioned to receive another portion of desiccant film 106 to repeat the cutting and transporting process.

The film support 138 with the cut desiccant film piece 105 disposed thereon rotates to the sealing station 130. The cut desiccant film piece 105 is placed atop the base film 104 and pressed thereon as a heating element 160 at the sealing station 130 heats the foil of the base film 104, causing the polymer sealing layer of foil to become pliable. The pressure and the heat cause the cut desiccant film piece 105 to adhere to the packaging base film 104 without the presence of a separate adhesive, thereby forming the packaging film 102.

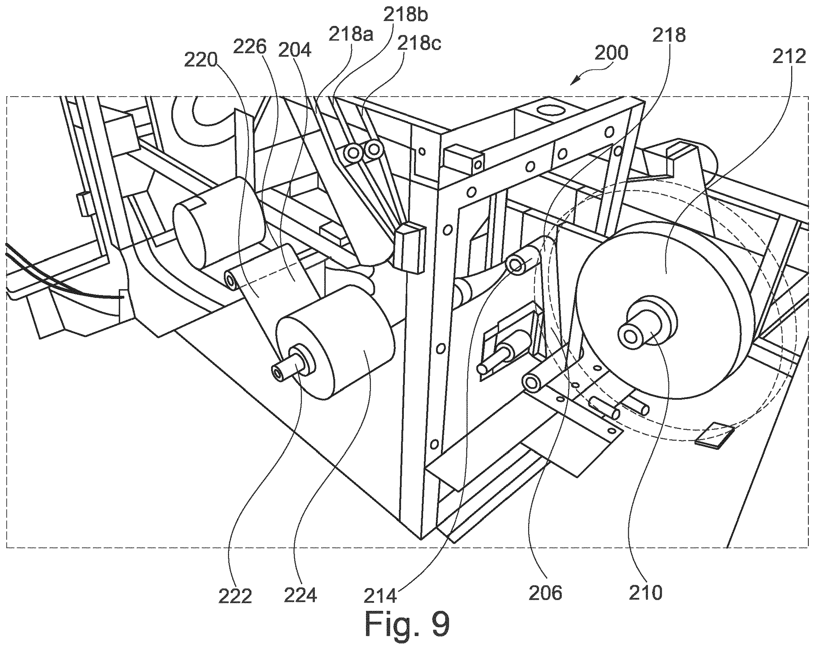

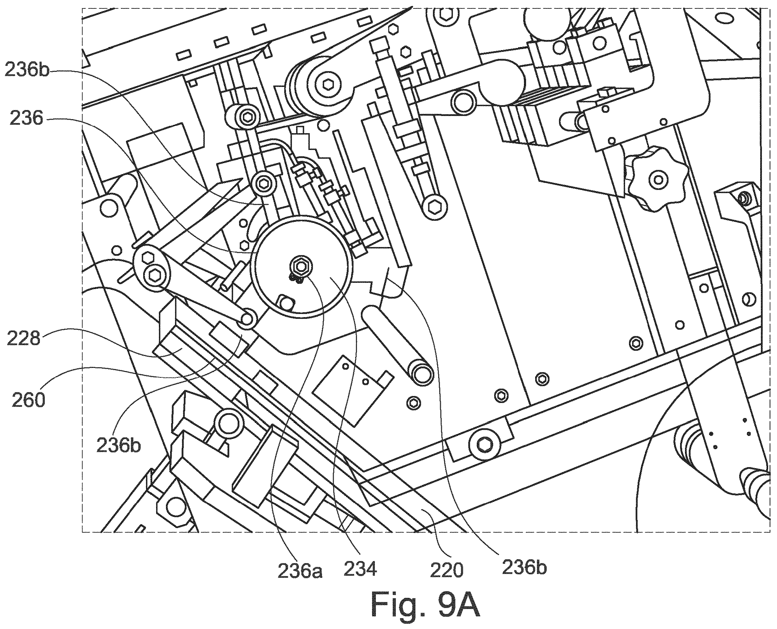

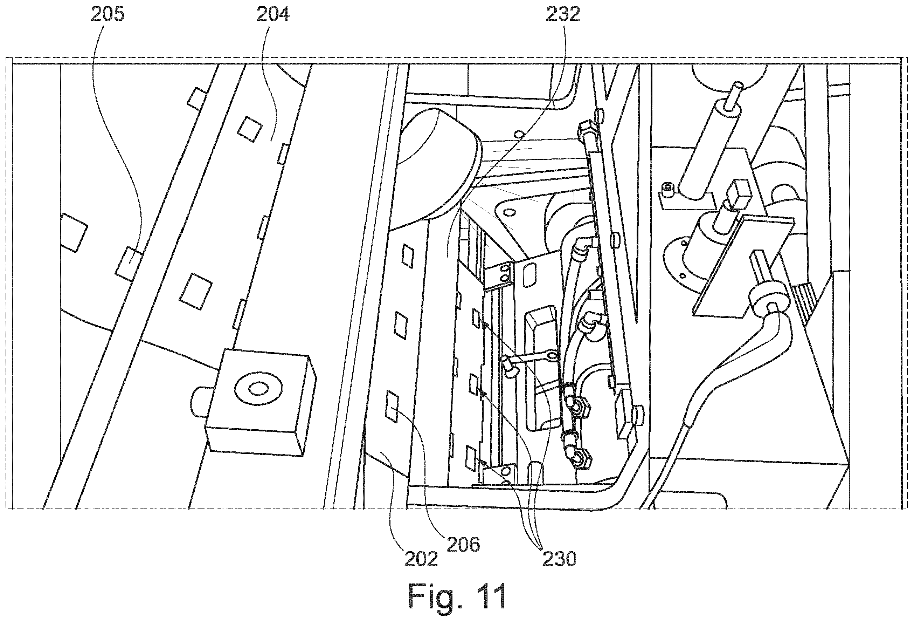

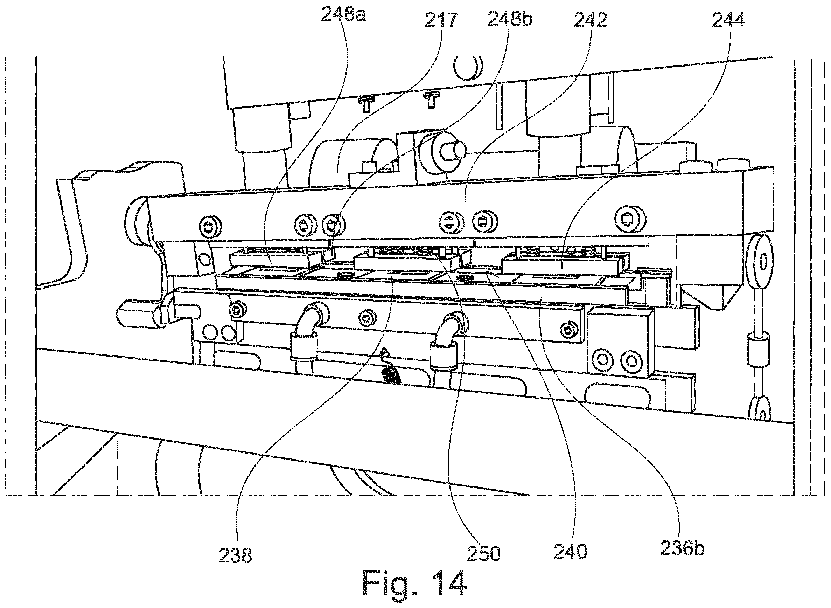

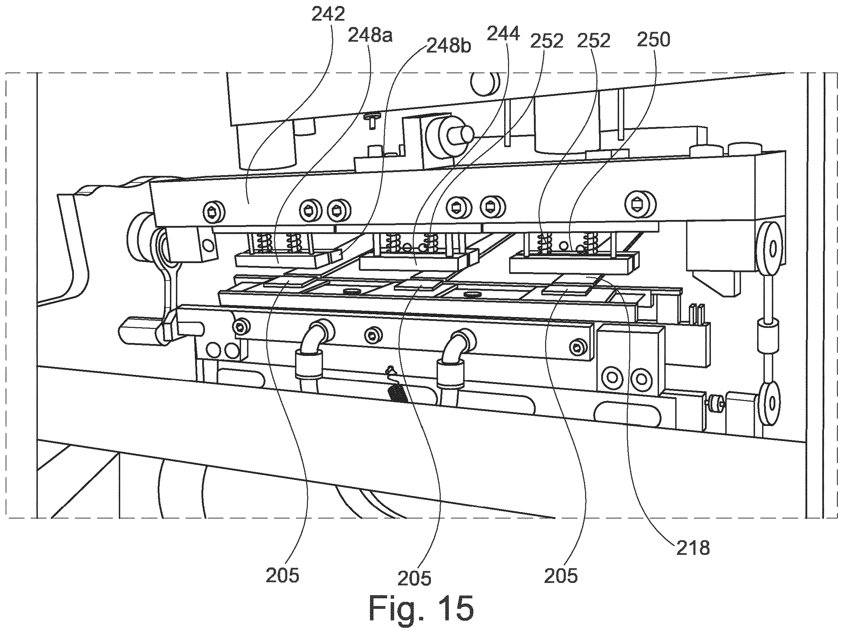

Referring now to Figs. 9 to 15, there is shown an alternative embodiment of an apparatus 200 for producing a packaging film 202. As with the embodiment of Figs. 1 to 8, the packaging film 202 includes a heat sealable base film 204 and a film 206 comprising an active agent that is configured to absorb, adsorb or release a selected material(s), secured (e.g., heat sealed) to the base film 204. As with the previous embodiment, the film 206 comprising an active agent is also predominantly referred to herein as a desiccant film 206, even though the film is not limited to a desiccant material as the active agent. Desiccant film 206 and base film 204 may be of the same composition as their counterparts (106 and 104) described with respect to Figs. 1 to 8. Also, desiccant film 206 may be heat staked to the base film 204 to form the packaging film 202, as described herein with respect to Figs. 1 to 8.

The apparatus 200 comprises a frame 208 that supports components of the apparatus 200. The apparatus 200 comprises at least one desiccant film real spindle 210. As shown, a single such spindle is provided, but optionally more than one may be included. A reel 212 of desiccant film 206 is rotatably mounted to the desiccant film reel spindle 210. From the reel 212, a ribbon 218 of desiccant film 206 is fed along a series of guideposts or rollers 214 towards one or more cutting stations 216 located downstream from the reel 212. The guideposts or rollers 214 help to keep the ribbon 218 of desiccant film 206 stable as it is fed from the reel 212 to the cutting stations 216. Optionally, a servo motor moves the ribbon of film 206 towards the cutting stations 216, optionally in a pulsing motion. In the embodiment shown, the ribbon 218, at a position downstream from the reel 212, is sliced longitudinally and separated into a plurality of (in this case, three) ribbon strips 218a,b,c. The ribbon strips 218a,b,c are pulled towards respective cutting stations 216 by feeder rollers 217, which are driven by the servo motor.

The apparatus 200 comprises at least one base film reel spindle 222. As shown, a single base film reel spindle 222 is provided, but it is contemplated that additional such spindles may be included. A reel 224 of base film 204 is rotatably mounted to the base film reel spindle 222. The base film 204 is conveyed on the apparatus 200 as a lengthy strip 220, optionally in the same direction, at least along one Cartesian coordinate axis, that the ribbon 218 moves. In other words, the axes of rotation (if hypothetically extended outward in both directions) of both spindles 210,222 are parallel to each other or collinear. The strip 220 is fed optionally beneath a roller 226 and guided to a platform 228. The platform 228 forms a portion of at least one sealing station 230 (in the illustrated embodiment, there are three such sealing stations 230). The strip 220 of base film is then fed to at least one more roller 232 as it exits the apparatus 200. Optionally, the strip 220 of base film 204 is advanced with continuous motion and substantially constant speed.

The apparatus 200 further comprises at least one transfer device 234, which is configured to transfer a cut desiccant film piece 205 from a cutting station 216 to a corresponding sealing station 230. The transfer device 234 comprises a rotatably mounted disk 236 comprising a central hub 236a with a plurality of legs 236b extending radially from the hub 236a. In the embodiment shown, there are three equally spaced legs 236b, but fewer or additional legs may optionally be provided. Alternatively, the disk may be circular. Each leg 236b comprises at least one film support 238 extending from an end surface 240 of the leg 236b. In the embodiment shown, three film supports 328 per leg 236b are provided. Optionally, the disk 236 is configured to rotate against the direction of movement of the strip 220 of base film 204, as the strip 220 is advanced along the platform 228.

The film supports 238 optionally comprise rubber, at least on their outer surfaces. Each film support 238 optionally includes small holes connected to a vacuum source, which help retain the cut desiccant film piece 205 to the film support 238 via suction from the vacuum source, when the cut desiccant film piece 205 is disposed thereon. Alternatively, an electrostatic charge or other means (e.g., grippers or knurls) may be employed to retain a cut desiccant film piece 205 to the film support 238.

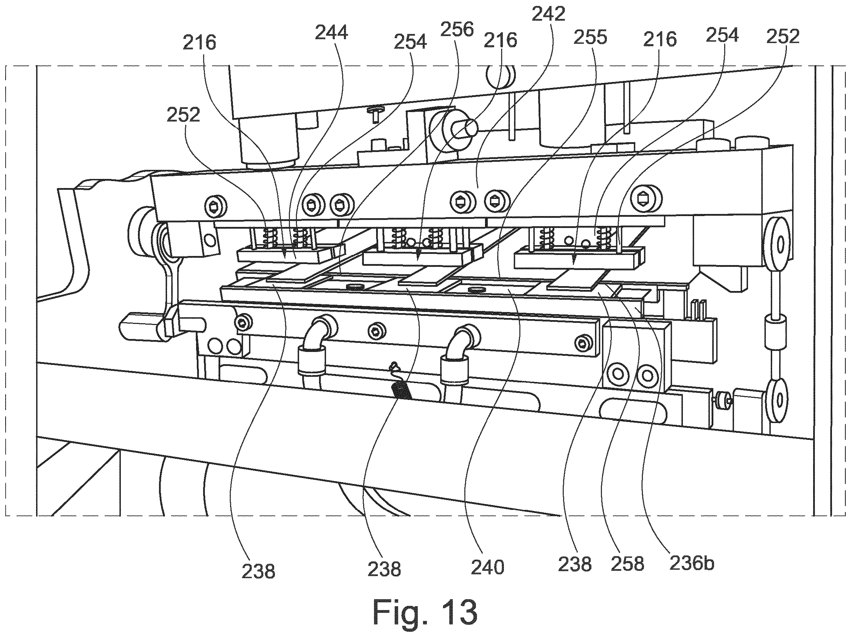

As best seen in Figs. 13-15, a vertically displaceable mount 242 is provided. The mount 242 is vertically displaceable from a first (up) position to a second (down) position. The mount 242 is optionally driven pneumatically or is servo-driven. The mount 242 comprises extensions 244 corresponding to respective film supports 238. As shown, since there are three film supports 238 per leg 236b, there are three corresponding (aligned) extensions 244. In alternative embodiments, there may be greater or fewer film supports depending on the number of corresponding extensions per leg. The extensions 244 each optionally include first and second platens 248a,b and a blade 250 therebetween. The platens 248a,b may be retained to the extensions 244 with posts 252, one or more of which optionally includes a compression spring member 254 disposed about it. The cutting station 216 further includes a cutting surface 255 and a cutting surface edge 256, to which a corresponding film support edge 258 is nearly adjacent at the time a desiccant film piece 205 is cut from the ribbon 218 of desiccant film 206.

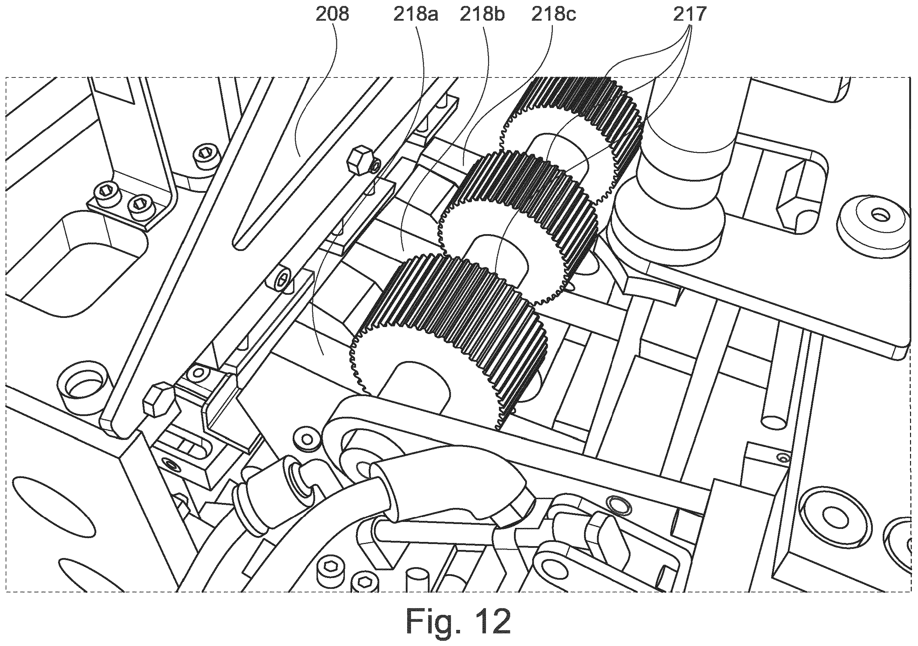

The cutting station 216 optionally operates as follows. As best seen in Fig. 12, slightly upstream of the cutting station 216 are feeder rollers 217, which optionally have ridges or a knurled surface pattern to help maintain control and placement of the ribbon strips 218a,b,c, as the feeder rollers 217 advance the ribbon strips 218a,b,c towards the cutting station 216. The feeder rollers 217 are servo-driven and are what optionally function to pull the ribbon strips 218a,b,c from the reel 212 towards the cutting stations 216. Having the feeder rollers 217 driven by a servo motor allows for precision in the desired length of each film piece 205.

As the end of a respective ribbon strip 218a,b,c of desiccant film 206 is advanced to the cutting station 216, the mount 242 is in the first position. At this point, a portion of the end of the ribbon strip 218a,b,c is disposed upon a corresponding film support 238 and another portion is disposed upon the cutting surface 255, nearly adjacent the cutting surface edge 256. The mount 242 is then displaced downwardly to the second position, thus driving the extension(s) 244 in a vertically downward direction. The platens 248a,b press down upon the portions of desiccant film 206 beneath them so as to retain the portions of desiccant film 206 in place. Nearly immediately thereafter or simultaneously, the blade 250 descends to cut the desiccant film 206 at the narrow gap between the cutting surface edge 256 and the corresponding film support edge 258. In this way, the cut desiccant film piece 205 is created and disposed upon the film support 238.

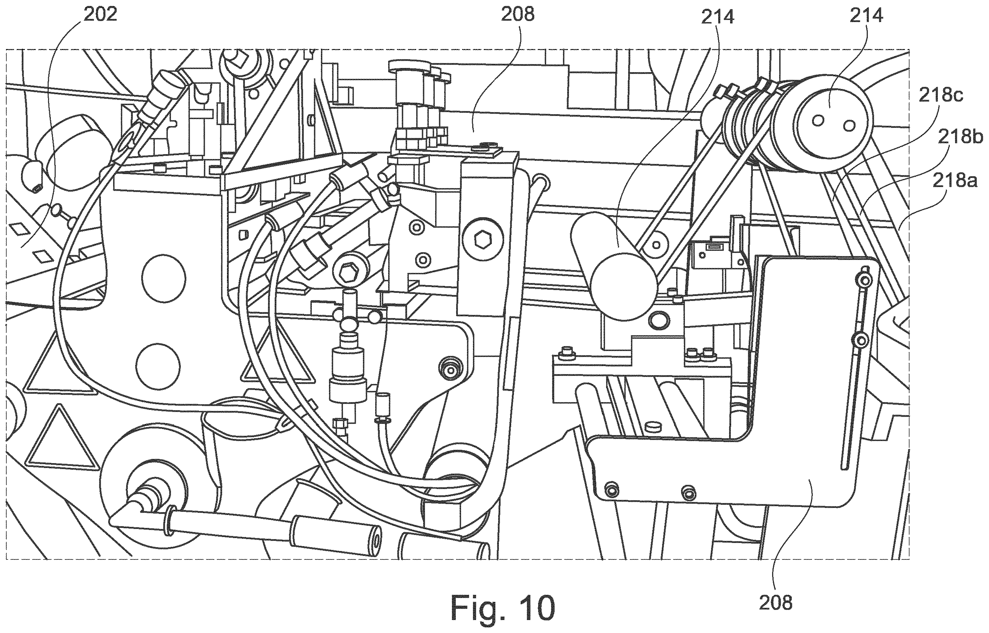

The cut desiccant film piece 205 is retained to the film support 238, as discussed above. The disk 236 then rotates, e.g., counter-clockwise from the vantage of the view shown in Figs. 10, 11 and 13-15, to transport the cut desiccant film piece 205 from the cutting station 216 to the sealing station 230. At the same time, another film support 238 from another leg 236b is positioned to receive another portion of the desiccant film 206 to repeat the cutting and transporting process steps.

The film support 238 with the cut desiccant film piece 205 disposed thereon rotates to the sealing station 230. The cut desiccant film piece 205 is placed atop the base film 204 and pressed thereon as a heating element 260 at the sealing station 230 heats the foil of the base film 204, causing the polymer sealing layer of foil to become pliable. The pressure and the heat cause the cut desiccant film piece 205 to adhere to the packaging base film 204 without the presence of a separate adhesive, thereby forming the packaging film 202. By separating the ribbon 218 into ribbon strips 218a,b,c, the apparatus 200 uniquely facilitates cutting and sealing operations in multiple lanes. In other words, the apparatus 200 is configured to facilitate a method of making a packaging film 202 that includes a plurality of sealed desiccant film pieces 205 positioned in a parallel linear arrangement.

Optionally, in any embodiment, the entrained polymer film includes an amount of active agent that is from 10% to 80%, optionally 30% to 75%, optionally 30% to 60%, optionally 30% to 50%, optionally from 35% to 70%, optionally from 35% to 60%, optionally from 35% to 55%, optionally from 35% to 50%, optionally 40% to 70%, optionally from 40% to 60%, optionally from 40% to 50%, optionally from 45% to 60%, optionally from 50% to 60%, by weight of the entrained polymer.

Optionally, in any embodiment, the entrained polymer film includes an amount of base polymer that may range from 10% to 70%, optionally from 10% to 60%, optionally from 10% to 50%, optionally from 10% to 40%, optionally from 20% to 60%, optionally from 30% to 70%, optionally from 30% to 60%, from 30% to 50%, optionally from 40% to 70%, optionally from 40% to 60%, from 40% to 50%, by weight of the entrained polymer.

Optionally, in any embodiment that utilizes channeling agent, the entrained polymer film includes an amount of channeling agent that may range from 1% to 16%, optionally from 1% to 14%, optionally from 1% to 12%, optionally from 1% to 10%, optionally from 1% to 8%, optionally from 1% to 6%, optionally from 1% to 5%, optionally from 1% to 4%, preferably from 2% to 16%, optionally from 2% to 14%, optionally from 2% to 12%, optionally from 2% to 10%, optionally from 2% to 8%, optionally from 2% to 6%, optionally from 2% to 5%, optionally from 2% to 4%, optionally from 4% to 12%, optionally from 4% to 10%, optionally from 4% to 8%, optionally from 4% to 6%, optionally from 4% to 5%, optionally from 6% to 12%, optionally from 6% to 10%, optionally from 6% to 8%, optionally from 8% to 12%, optionally from 8% to 10%, by weight of the entrained polymer.

The breadth and scope of the present disclosed concept should not be limited by any of the above-described exemplary embodiments, but should be defined only in accordance with the following claims.

## Claims

1. A method of manufacturing a packaging film (102, 202) for use in storage of products being sensitive to at least one component in the ambient environment, the method comprising the following steps:
- providing an apparatus (100, 200) configured to produce a packaging film (102, 202), the apparatus (100, 200) comprising a cutting station (116, 216), a sealing station (130, 230) that is positioned at a separate location from the cutting station (116, 216), and a transfer device (134, 234) comprising a rotatably mounted disk (136, 236) having a plurality of film supports (138, 238);
- conveying an elongated strip of a heat sealable base film (104, 204) on the apparatus (100, 200), wherein the base film comprises a foil and a polymer seal layer atop the foil;
- conveying a ribbon (118, 218) of entrained polymer film (106, 206) on the apparatus (100, 200), wherein the entrained polymer is a monolithic material comprising a base polymer and an active agent that absorbs, adsorbs or releases a selected material, and passing the ribbon (118, 218) of entrained polymer film (106, 206) through the cutting station (116, 216) wherein a piece (105, 205) of entrained polymer film (106, 206) is cut from an end section of the ribbon;
- transferring the piece (105, 205) of entrained polymer film (106, 206) cut from the ribbon (118, 218) of entrained polymer film (106, 206) from the cutting station (116, 216) to the sealing station (130, 230) by disposing the piece (105, 205) of entrained polymer film (106, 206) on a respective film support (138, 238) and by rotating the transfer device (134, 234), whereupon the piece (105, 205) of entrained polymer film (106, 206) is sealed to a portion of the heat sealable base film (104, 204), thereby forming the packaging film (102, 202).

2. The method according to claim 1, wherein the active agent makes up 30% to 75% by weight of the entrained polymer and the base polymer makes up 20% to 60% by weight of the entrained polymer.

3. The method according to claim 1 or 2, the entrained polymer further comprising a channeling agent, and wherein the channeling agent makes up from 1% to 16%, optionally from 1% to 14%, optionally from 2% to 12%, by weight of the entrained polymer.

4. The method according to any of claims 1 to 3, wherein the active agent is a desiccant or an oxygen scavenger.

5. The method of any previous claim, wherein the entrained polymer film is from 0.05 mm to 1.0 mm thick.

6. The method of any previous claim, the sealing station (130, 230) comprising a platform upon which the portion of heat sealable base film (104, 204) is disposed, the platform having a heating element that applies heat to the portion of heat sealable base film (104, 204), causing an upper polymer sealing layer of the portion of heat sealable base film (104, 204) to become pliable, the sealing station (130, 230) further comprising a film support onto which the piece (105, 205) of entrained polymer film (106, 206) is retained and then disposed atop the heat sealable base film (104, 204), the film support applying pressure onto the piece (105, 205) of entrained polymer film (106, 206) and base film while the upper polymer sealing layer is pliable from the heat, so as to adhere the piece (105, 205) of entrained polymer film (106, 206) to the portion of heat sealable base film (104, 204), preferably without the presence of a separate adhesive, thereby forming the packaging film (102, 202).

7. The method of any previous claim, wherein the step of transferring the piece (105, 205) of entrained polymer film (106, 206) from the cutting station (116, 216) to the sealing station (130, 230) is effectuated with a rotatable transfer mechanism.

8. The method of claim 7, wherein the piece (105, 205) of entrained polymer film (106, 206) is rotated on the rotatable transfer mechanism at least 90° from the cutting station (116, 216) to the sealing station (130, 230), optionally at least 120°, optionally 180°.

9. An apparatus (100, 200) for manufacturing a packaging film (102, 202) for use in storage of products being sensitive to at least one component in the ambient environment, wherein the apparatus (100, 200) comprises a cutting station (116, 216), a sealing station (130, 230), and a transfer device (134, 234);
wherein the sealing station (130, 230) is positioned at a separate location from the cutting station (116, 216);
wherein the apparatus (100, 200) is configured to convey an elongated strip of a heat sealable base film (104, 204), wherein the base film comprises a foil and a polymer seal layer atop the foil;
wherein the apparatus (100, 200) is configured to convey a ribbon (118, 218) of entrained polymer film (106, 206), wherein the entrained polymer is a monolithic material comprising a base polymer and an active agent that absorbs, adsorbs or releases a selected material, and pass the ribbon (118, 218) of entrained polymer film (106, 206) through the cutting station (116, 216);
wherein the cutting station (116, 216) is configured to cut a piece (105, 205) of entrained polymer film (106, 206) from an end section of the ribbon;
wherein the apparatus (100, 200) is configured to transfer the piece (105, 205) of entrained polymer film (106, 206) from the cutting station (116, 216) to the sealing station (130, 230),
wherein the sealing station (130, 230) is configured to seal the piece (105, 205) of entrained polymer film (106, 206) to a portion of the heat sealable base film (104, 204) to form the packaging film (102, 202),
wherein the transfer device (134, 234) comprises a rotatably mounted disk (136, 236) having a plurality of film supports (138, 238),
wherein each film support (138, 238) is configured to have disposed thereon a respective piece (105, 205) of entrained polymer film (106, 206) cut from the ribbon (118, 218) of entrained polymer film (106, 206) at the cutting station (116, 216), and
wherein the transfer device (134, 234) is configured to rotate so as to transfer the respective piece (105, 205) of entrained polymer film (106, 206) from the cutting station (116, 216) to the sealing station (130, 230).

10. The apparatus (100, 200) of claim 9, wherein the sealing station (130, 230) comprises a platform (128, 228) configured to have disposed thereon a portion of the heat sealable base film (104, 204),
wherein the platform (128, 228) has a heating element (160, 260) configured to apply heat to the portion of the heat sealable base film (104, 204) to cause an upper polymer sealing layer of the portion of the heat sealable base film (104, 204) to become pliable,
wherein the film supports (138, 238) are configured to dispose the respective piece (105, 205) of entrained polymer film (106, 206) atop the portion of the heat sealable base film (104, 204) and to apply pressure onto the respective piece (105, 205) of entrained polymer film (106, 206) and the portion of the heat sealable base film (104, 204) while the upper polymer sealing layer is pliable from the heat, so as to adhere the respective piece (105, 205) of entrained polymer film (106, 206) to the portion of the heat sealable base film (104, 204), thereby forming the packaging film (102, 202).

11. The apparatus (100, 200) of claim 9 or 10, wherein the film supports (138, 238) comprise small holes connected to a vacuum source,
wherein the small holes are configured to help retain the respective piece (105, 205) of entrained polymer film (106, 206) to the film support (138, 238) via suction from the vacuum source when the respective piece (105, 205) of entrained polymer film (106, 206) is disposed on the film support (138, 238) .

## Patentansprüche

1. Verfahren zur Herstellung einer Verpackungsfolie (102, 202) zur Verwendung bei der Lagerung von Produkten, die gegenüber mindestens einer Komponente in der Umgebung empfindlich sind, wobei das Verfahren die folgenden Schritte umfasst:
- Bereitstellen einer Vorrichtung (100, 200), die ausgestaltet ist, um eine Verpackungsfolie (102, 202) zu produzieren, wobei die Vorrichtung (100, 200) eine Schneidestation (116, 216), eine Versiegelungsstation (130, 230), die an einer von der Schneidestation (116, 216) getrennten Stelle positioniert ist, und eine Übertragungsvorrichtung (134, 234), die eine drehbar gelagerte Scheibe (136, 236) mit einer Vielzahl von Folienträgern (138, 238) aufweist, umfasst;
- Fördern eines länglichen Streifens einer heißsiegelbaren Basisfolie (104, 204) auf der Vorrichtung (100, 200), wobei die Basisfolie eine Folie und eine Polymerversiegelungsschicht auf der Folie umfasst;
- Fördern eines Bandes (118, 218) aus mitgeführter Polymerfolie (106, 206) auf der Vorrichtung (100, 200), wobei das mitgeführte Polymer ein monolithisches Material ist, das ein Basispolymer und ein aktives Mittel, das ein ausgewähltes Material absorbiert, adsorbiert oder freisetzt, umfasst, und Führen des Bandes (118, 218) aus mitgeführter Polymerfolie (106, 206) durch die Schneidestation (116, 216), wobei ein Stück (105, 205) der mitgeführten Polymerfolie (106, 206) aus einem Endabschnitt des Bandes geschnitten wird;
- Übertragen des aus dem Band (118, 218) der mitgeführten Polymerfolie (106, 206) geschnittenen Stückes (105, 205) der mitgeführten Polymerfolie (106, 206) aus der Schneidestation (116, 216) zu der Versiegelungsstation (130, 230) durch Anordnen des Stückes (105, 205) der mitgeführten Polymerfolie (106, 206) auf einem entsprechenden Folienträger (138, 238) und durch Drehen der Übertragungsvorrichtung (134, 234),
woraufhin das Stück (105, 205) der mitgeführten Polymerfolie (106, 206) mit einem Teil der heißsiegelbaren Basisfolie (104, 204) versiegelt wird, wodurch die Verpackungsfolie (102, 202) gebildet wird.

2. Verfahren nach Anspruch 1, wobei das aktive Mittel 30 Gew.-% bis 75 Gew.-% des mitgeführten Polymers ausmacht und das Basispolymer 20 Gew.-% bis 60 Gew.-% des mitgeführten Polymers ausmacht.

3. Verfahren nach Anspruch 1 oder 2, wobei das mitgeführte Polymer ferner ein Kanalisierungsmittel umfasst, und wobei das Kanalisierungsmittel von 1 Gew.-% bis 16 Gew.-%, optional von 1 Gew.-% bis 14 Gew.-%, optional von 2 Gew.-% bis 12 Gew.-% des mitgeführten Polymers ausmacht.

4. Verfahren nach irgendeinem der Ansprüche 1 bis 3, wobei das aktive Mittel ein Trocknungsmittel oder ein Sauerstofffänger ist.

5. Verfahren nach irgendeinem vorhergehenden Anspruch, wobei die mitgeführte Polymerfolie von 0,05 mm bis 1,0 mm stark ist.

6. Verfahren nach irgendeinem der vorhergehenden Ansprüche, wobei die Versiegelungsstation (130, 230) eine Plattform umfasst, auf der der Teil der heißsiegelbaren Basisfolie (104, 204) angeordnet ist, wobei die Plattform ein Heizelement aufweist, das Wärme auf den Teil der heißsiegelbaren Basisfolie (104, 204) aufbringt, was eine obere Polymerversiegelungsschicht des Teils der heißsiegelbaren Basisfolie (104, 204) dazu veranlasst, biegsam zu werden, wobei die Versiegelungsstation (130, 230) ferner einen Folienträger umfasst, auf dem das Stück (105, 205) der mitgeführten Polymerfolie (106, 206) gehalten und dann auf der heißsiegelbaren Basisfolie (104, 204) angeordnet wird, wobei der Folienträger Druck auf das Stück (105, 205) der mitgeführten Polymerfolie (106, 206) und die Basisfolie ausübt, während die obere Polymerversiegelungsschicht durch die Wärme biegsam ist, um so das Stück (105, 205) der mitgeführten Polymerfolie (106, 206) an den Teil der heißsiegelbaren Basisfolie (104, 204) zu kleben, vorzugsweise ohne das Vorhandensein eines separaten Klebstoffes, wodurch die Verpackungsfolie (102, 202) gebildet wird.

7. Verfahren nach irgendeinem vorhergehenden Anspruch, wobei der Schritt des Übertragens des Stückes (105, 205) der mitgeführten Polymerfolie (106, 206) aus der Schneidestation (116, 216) zu der Versiegelungsstation (130, 230) mit einem drehbaren Übertragungsmechanismus umgesetzt wird.

8. Verfahren nach Anspruch 7, wobei das Stück (105, 205) der mitgeführten Polymerfolie (106, 206) auf dem drehbaren Übertragungsmechanismus um mindestens 90° aus der Schneidestation (116, 216) zu der Versiegelungsstation (130, 230) gedreht wird, optional um mindestens 120°, optional um 180°.

9. Vorrichtung (100, 200) zur Herstellung einer Verpackungsfolie (102, 202) zur Verwendung bei der Lagerung von Produkten, die gegenüber mindestens einer Komponente in der Umgebung empfindlich sind, wobei die Vorrichtung (100, 200) eine Schneidestation (116, 216), eine Versiegelungsstation (130, 230) und eine Übertragungsvorrichtung (134, 234) umfasst;
wobei die Versiegelungsstation (130, 230) an einer von der Schneidestation (116, 216) getrennten Stelle positioniert ist;
wobei die Vorrichtung (100, 200) ausgestaltet ist, um einen länglichen Streifen einer heißsiegelbaren Basisfolie (104, 204) zu fördern, wobei die Basisfolie eine Folie und eine Polymerversiegelungsschicht auf der Folie umfasst;
wobei die Vorrichtung (100, 200) ausgestaltet ist, um ein Band (118, 218) aus mitgeführter Polymerfolie (106, 206) zu fördern, wobei das mitgeführte Polymer ein monolithisches Material ist, das ein Basispolymer und ein aktives Mittel, das ein ausgewähltes Material absorbiert, adsorbiert oder freisetzt, umfasst, und um das Band (118, 218) aus mitgeführter Polymerfolie (106, 206) durch die Schneidestation (116, 216) zu führen;
wobei die Schneidestation (116, 216) ausgestaltet ist, um ein Stück (105, 205) der mitgeführten Polymerfolie (106, 206) von einem Endabschnitt des Bandes zu schneiden;
wobei die Vorrichtung (100, 200) ausgestaltet ist, um das Stück (105, 205) der mitgeführten Polymerfolie (106, 206) aus der Schneidestation (116, 216) zu der Versiegelungsstation (130, 230) zu übertragen,
wobei die Versiegelungsstation (130, 230) ausgestaltet ist, um das Stück (105, 205) der mitgeführten Polymerfolie (106, 206) mit einem Teil der heißsiegelbaren Basisfolie (104, 204) zu versiegeln, um die Verpackungsfolie (102, 202) zu bilden,
wobei die Übertragungsvorrichtung (134, 234) eine drehbar gelagerte Scheibe (136, 236) mit einer Vielzahl von Folienträgern (138, 238) umfasst,
wobei jeder Folienträger (138, 238) ausgestaltet ist, um darauf ein entsprechendes Stück (105, 205) der mitgeführten Polymerfolie (106, 206) angeordnet zu haben, das von dem Band (118, 218) der mitgeführten Polymerfolie (106, 206) an der Schneidestation (116, 216) geschnitten wird, und
wobei die Übertragungsvorrichtung (134, 234) ausgestaltet ist, um sich zu drehen, um so das jeweilige Stück (105, 205) der mitgeführten Polymerfolie (106, 206) aus der Schneidestation (116, 216) zu der Versiegelungsstation (130, 230) zu übertragen.

10. Vorrichtung (100, 200) nach Anspruch 9, wobei die Versiegelungsstation (130, 230) eine Plattform (128, 228) umfasst, die ausgestaltet ist, um darauf einen Teil der heißsiegelbaren Basisfolie (104, 204) angeordnet zu haben,
wobei die Plattform (128, 228) ein Heizelement (160, 260) aufweist, das ausgestaltet ist, um Wärme auf den Teil der heißsiegelbaren Basisfolie (104, 204) aufzubringen, um eine obere Polymerversiegelungsschicht des Teils der heißsiegelbaren Basisfolie (104, 204) zu veranlassen, biegsam zu werden,
wobei die Folienträger (138, 238) ausgestaltet sind, um das jeweilige Stück (105, 205) der mitgeführten Polymerfolie (106, 206) auf dem Teil der heißsiegelbaren Basisfolie (104, 204) anzuordnen und Druck auf das jeweilige Stück (105, 205) der mitgeführten Polymerfolie (106, 206) und den Teil der heißsiegelbaren Basisfolie (104, 204) auszuüben, während die obere Polymerversiegelungsschicht durch die Wärme biegsam ist, um so das jeweilige Stück (105, 205) der mitgeführten Polymerfolie (106, 206) an den Teil der heißsiegelbaren Basisfolie (104, 204) zu kleben, wodurch die Verpackungsfolie (102, 202) gebildet wird.

11. Vorrichtung (100, 200) nach Anspruch 9 oder 10, wobei die Folienträger (138, 238) kleine Löcher umfassen, die mit einer Vakuumquelle verbunden sind,
wobei die kleinen Löcher ausgestaltet sind, um zu helfen, das jeweilige Stück (105, 205) der mitgeführten Polymerfolie (106, 206) an dem Folienträger (138, 238) durch Saugen von der Vakuumquelle zu halten, wenn das jeweilige Stück (105, 205) der mitgeführten Polymerfolie (106, 206) auf dem Folienträger (138, 238) angeordnet wird.

## Revendications

1. Procédé de fabrication d'un film d'emballage (102, 202) destiné à être utilisé pour le stockage de produits sensibles à au moins un composant de l'environnement ambiant, le procédé comprenant les étapes suivantes :
- la fourniture d'un appareil (100, 200) configuré pour produire un film d'emballage (102, 202), l'appareil (100, 200) comprenant un poste de découpe (116, 216), un poste de scellage (130, 230) qui est positionné à un emplacement séparé du poste de découpe (116, 216), et un dispositif de transfert (134, 234) comprenant un disque monté rotatif (136, 236) ayant une pluralité de supports de film (138, 238) ;
- le transport d'une bande allongée d'un film de base thermoscellable (104, 204) sur l'appareil (100, 200), dans lequel le film de base comprend une feuille et une couche de scellage polymère au-dessus de la feuille ;
- le transport d'un ruban (118, 218) de film polymère entraîné (106, 206) sur l'appareil (100, 200), dans lequel le polymère entraîné est un matériau monolithique comprenant un polymère de base et un agent actif qui absorbe, adsorbe ou libère un matériau sélectionné, et le passage du ruban (118, 218) de film polymère entraîné (106, 206) à travers le poste de découpe (116, 216) dans lequel un morceau (105, 205) de film polymère entraîné (106, 206) est coupé à partir d'une section d'extrémité du ruban ;
- le transfert du morceau (105, 205) de film polymère entraîné (106, 206) découpé dans le ruban (118, 218) de film polymère entraîné (106, 206) du poste de découpe (116, 216) au poste de scellage (130, 230) en disposant le morceau (105, 205) de film polymère entraîné (106, 206) sur un support de film respectif (138, 238) et en faisant tourner le dispositif de transfert (134, 234),
après quoi le morceau (105, 205) de film polymère entraîné (106, 206) est scellé à une partie du film de base thermoscellable (104, 204), formant ainsi le film d'emballage (102, 202).

2. Procédé selon la revendication 1, dans lequel l'agent actif représente 30 % à 75 % en poids du polymère entraîné et le polymère de base représente 20 % à 60 % en poids du polymère entraîné.

3. Procédé selon la revendication 1 ou 2, le polymère entraîné comprenant en outre un agent de canalisation, et dans lequel l'agent de formation de canaux représente de 1 % à 16 %, éventuellement de 1 % à 14 %, éventuellement de 2 % à 12 %, en poids du polymère entraîné.

4. Procédé selon l'une quelconque des revendications 1 à 3, dans lequel l'agent actif est un dessiccant ou un piégeur d'oxygène.

5. Procédé selon une quelconque revendication précédente, dans lequel le film polymère entraîné a une épaisseur de 0,05 mm à 1,0 mm.

6. Procédé selon une quelconque revendication précédente, le poste de scellage (130, 230) comprenant une plateforme sur laquelle est disposée la partie de film de base thermoscellable (104, 204), la plateforme ayant un élément chauffant qui applique de la chaleur à la partie de film de base thermoscellable (104, 204), rendant une couche de scellage polymère supérieure de la partie de film de base thermoscellable (104, 204) pliable, le poste de scellage (130, 230) comprenant en outre un support de film sur lequel le morceau (105, 205) de film polymère entraîné (106, 206) est retenu puis disposé au-dessus du film de base thermoscellable (104, 204), le support de film appliquant une pression sur le morceau (105, 205) de film polymère entraîné (106, 206) et le film de base tandis que la couche de scellage polymère supérieure est pliable sous l'effet de la chaleur, de manière à faire adhérer le morceau (105, 205) de film polymère entraîné (106, 206) sur la partie du film de base thermoscellable (104, 204), de préférence sans la présence d'un adhésif séparé, formant ainsi le film d'emballage (102, 202).

7. Procédé selon une quelconque revendication précédente, dans lequel l'étape de transfert du morceau (105, 205) de film polymère entraîné (106, 206) du poste de découpe (116, 216) au poste de scellage (130, 230) est effectuée avec un mécanisme de transfert rotatif.

8. Procédé selon la revendication 7, dans lequel le morceau (105, 205) de film polymère entraîné (106, 206) est tourné sur le mécanisme de transfert rotatif d'au moins 90° du poste de découpe (116, 216) au poste de scellage (130, 230), éventuellement d'au moins 120°, éventuellement de 180°.

9. Appareil (100, 200) pour la fabrication d'un film d'emballage (102, 202) destiné à être utilisé pour le stockage de produits sensibles à au moins un composant de l'environnement ambiant, dans lequel l'appareil (100, 200) comprend un poste de découpe (116, 216), un poste de scellage (130, 230) et un dispositif de transfert (134, 234) ;
dans lequel le poste de scellage (130, 230) est positionné à un emplacement séparé du poste de découpe (116, 216) ;
dans lequel l'appareil (100, 200) est configuré pour transporter une bande allongée d'un film de base thermoscellable (104, 204), dans lequel le film de base comprend une feuille et une couche de scellage polymère au-dessus de la feuille ;
dans lequel l'appareil (100, 200) est configuré pour transporter un ruban (118, 218) de film polymère entraîné (106, 206), dans lequel le polymère entraîné est un matériau monolithique comprenant un polymère de base et un agent actif qui absorbe, adsorbe ou libère un matériau sélectionné, et faire passer le ruban (118, 218) de film polymère entraîné (106, 206) à travers le poste de découpe (116, 216) ;
dans lequel le poste de découpe (116, 216) est configuré pour découper un morceau (105, 205) de film polymère entraîné (106, 206) à partir d'une section d'extrémité du ruban ;
dans lequel l'appareil (100, 200) est configuré pour transférer le morceau (105, 205) de film polymère entraîné (106, 206) du poste de découpe (116, 216) au poste de scellage (130, 230),
dans lequel le poste de scellage (130, 230) est configuré pour sceller le morceau (105, 205) de film polymère entraîné (106, 206) à une partie du film de base thermoscellable (104, 204) pour former le film d'emballage (102, 202),
dans lequel le dispositif de transfert (134, 234) comprend un disque monté rotatif (136, 236) comportant une pluralité de supports de film (138, 238),
dans lequel chaque support de film (138, 238) est configuré pour recevoir sur celui-ci un morceau respectif (105, 205) de film polymère entraîné (106, 206) découpé dans le ruban (118, 218) de film polymère entraîné (106, 206) au niveau du poste de découpe (116, 216), et
dans lequel le dispositif de transfert (134, 234) est configuré pour tourner de manière à transférer le morceau respectif (105, 205) de film polymère entraîné (106, 206) du poste de découpe (116, 216) au poste de scellage (130, 230).

10. Appareil (100, 200) selon la revendication 9, dans lequel le poste de scellage (130, 230) comprend une plateforme (128, 228) configurée pour recevoir sur celle-ci une partie du film de base thermoscellable (104, 204),
dans lequel la plateforme (128, 228) a un élément chauffant (160, 260) configuré pour appliquer de la chaleur sur la partie du film de base thermoscellable (104, 204) afin de rendre une couche de scellage polymère supérieure de la partie du film de base thermoscellable (104, 204) pliable,
dans lequel les supports de film (138, 238) sont configurés pour disposer le morceau respectif (105, 205) de film polymère entraîné (106, 206) au-dessus de la partie du film de base thermoscellable (104, 204) et pour appliquer une pression sur le morceau respectif (105, 205) de film polymère entraîné (106, 206) et la partie du film de base thermoscellable (104, 204) tandis que la couche de scellage polymère supérieure est pliable sous l'effet de la chaleur, de manière à faire adhérer le morceau respectif (105, 205) de film polymère entraîné (106, 206) à la partie du film de base thermoscellable (104, 204), formant ainsi le film d'emballage (102, 202).

11. Appareil (100, 200) selon la revendication 9 ou 10, dans lequel les supports de film (138, 238) comprennent de petits trous connectés à une source de vide,
dans lequel les petits trous sont configurés pour aider à retenir le morceau respectif (105, 205) de film polymère entraîné (106, 206) sur le support de film (138, 238) par aspiration depuis la source de vide lorsque le morceau respectif (105, 205) de film polymère entraîné (106, 206) est disposé sur le support de film (138, 238).
